(19) Europäisches Patentamt
European Patent Office
Office européen des brevets

(11) Veröffentlichungsnummer: **0 082 973**
**B1**

(12) # EUROPÄISCHE PATENTSCHRIFT

(45) Veröffentlichungstag der Patentschrift: **18.09.85**

(51) Int. Cl.[4]: **C 07 C133/02**

(21) Anmeldenummer: **82111083.0**

(22) Anmeldetag: **01.12.82**

(54) **Neue biuretgruppenhaltige Polyisocyanate sowie ein Verfahren zu deren Herstellung.**

(30) Priorität: **30.12.81 DE 3151853**

(43) Veröffentlichungstag der Anmeldung: **06.07.83 Patentblatt 83/27**

(45) Bekanntmachung des Hinweises auf die Patenterteilung: **18.09.85 Patentblatt 85/38**

(84) Benannte Vertragsstaaten: **AT BE CH DE FR GB IT LI LU NL SE**

(56) Entgegenhaltungen:
**DE-C- 1 101 394**
**FR-A- 1 580 013**
**GB-A- 1 152 915**
**US-A- 3 631 198**

(73) Patentinhaber: **CHEMISCHE WERKE HÜLS AG**
**Postfach 1320**
**D-4370 Marl 1 (DE)**

(72) Erfinder: **Disteldorf, Josef, Dr.**
**Am Sengenhoff 2a**
**D-4690 Herne 1 (DE)**
Erfinder: **Hübel, Werner, Dr.**
**Birnenbruchstrasse 34**
**D-4690 Herne 1 (DE)**
Erfinder: **Wolf, Elmar, Dr.**
**Stauffenbergstrasse 7**
**D-4350 Recklinghausen (DE)**

(74) Vertreter: **Steil, Hanna, Dipl.-Chem.**
**RSP PATENTE - PB 15 Postfach 1320**
**D-4370 Marl 1 (DE)**

**EP 0 082 973 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind biuretgruppenhaltige Polyisocyanate der Formel

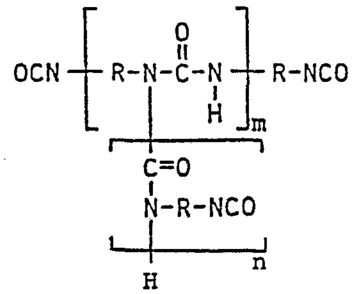

in welcher die einzelnen Reste R gleich oder verschieden sind un Kohlenwasserstoffreste der Formeln

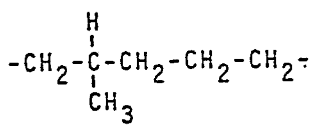 oder 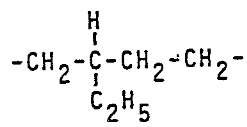

bedeuten und m ≥ n 1 bis 5 bedeutet.

Gegenstand der vorliegenden Erfindung ist auch ein Verfahren zur Herstellung dieser neuen Verbindungen durch Umsetzung von aliphatischen Diisocyanaten mit Biuretisierungsmitteln (spez. $H_2O$), dadurch gekennzeichnet, daß man als aliphatische Diisocyanate ein im wesentlichen aus einem Diisocyanat der Formel

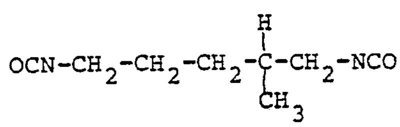

und gegebenenfalls einem Diisocyanat der Formel

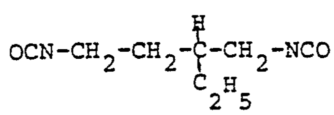

bestehendes Diisocyanat bzw. Diisocyanat-Gemisch verwendet.

Aliphatische Biuretgruppen enthaltende Polyisocyanate haben auf dem Gebiet der Überzüge und Beschichtungen eine erhebliche technische Bedeutung erlangt. Sie finden ausgedehnte praktische Verwendung zur Herstellung lichtbeständiger Polyurethankunststoffe und Lacküberzüge hoher Lichtechtheit, Kreidungsbeständigkeit und ausgezeichneter Glanzhaltung. Sie werden hergestellt aus aliphatischen Diisocyanaten, spez. Hexamethylendiisocyanat (HDI) und Wasser bzw. wasserabspaltenden Verbindungen. Ihre Bildung verläuft über die Zwischenstufe eines Harnstoffdiisocyanats, an welches sich weiteres Diisocyanat über die Wasserstoffatome der Harnstoffgruppen anlagert. Es gibt eine Reihe von Verfahren zur Herstellung von Polyisocyanaten mit Biuretstrukturen : DT-PS-1 101 394, DE-AS-1 543 178, DE-OS-1 931 055. Bei den nach diesen Verfahren zugänglichen Polyisocyanaten mit Biuretstruktur auf HDI-Basis handelt es sich um komplexe Gemische, die neben den eigentlichen Biuret-Triisocyanaten

a) noch höhere Homologe, z. B. Tetra- und/oder Pentaisocyanat mit Biuretgruppen und

b) auch Harnstoffgruppen enthaltende Polyisocyanate

aufweisen.

Insbesondere der hohe Gehalt der gemäß der aufgeführten Verfahren zugänglichen Biuretpolyisocyanate an den unter a) und b) genannten Polyisocyanaten ist für die hohe Viskosität der Biuretpolyisocyanate verantwortlich. Neben der viskositätserhöhenden Eigenschaft zeigen die unter b) genannten Polyisocyanate die unangenehme Eigenschaft, daß sie in verdünnten Lösungen der Biuretpolyisocyanatgemische bei einem Feststoffgehalt von 10-20 Gew.-% zur Abscheidung neigen, so daß opake, getrübte Lösungen mit sich absetzendem Bodensatz erhalten werden. Wird ein sehr hoher Überschuß an Diisocyanaten gewählt, so gelingt die Herstellung von Biuretgruppen aufweisenden Polyisocyanaten mit einer verbesserten Berdünnbarkeit und einer wesentlich erniedrigten Viskosität. Das nicht umgesetzte Diisocyanat läßt sich durch eine Dünnschichtdestillation vom Reaktionsprodukt abtrennen.

Die so hergestellten Biuretpolyisocyanate auf HDI-Basis haben allerdings den Nachteil, daß sie mit

den in PUR-Lacken im allgemeinen eingesetzten Polyhydroxyverbindungen nur beschränkt verträglich sind und darüber hinaus in den oft zur Anwendung gelangenden unpolaren Lösungsmitteln, wie z. B. Testbenzin, nur beschränkt löslich sind. Ein weiterer Nachteil dieser Biuretpolyisocyanate des HDI ist ihre nur mäßige Thermo- wie Oxidationsbeständigkeit, die vor allem beim Überbrennen der auf Basis dieser Verbindungen hergestellten Lackfilme offenkundig wird.

Es war daher die Aufgabe der vorliegenden Erfindung, neue Biuretpolyisocyanate zur Verfügung zu stellen, welche die bekannten Vorteile dieser Verbindungsklasse wie hoher NCO-Gehalt, niedriger Dampfdruck, gute Lichtechtheit in sich vereinigen, ohne mit den genannten Nachteilen der Verbindungen des Standes der Technik behaftet zu sein.

Diese Aufgabe konnte mit der Bereitstellung der eingangs erwähnten neuen Biuretgruppen aufweisenden Polyisocyanate bzw. mit dem erfindungsgemäßen Verfahren zu ihrer Herstellung gelöst werden.

Ausgangsmaterialien für das erfindungsgemäße Verfahren sind Diisocyanat-Gemische, die im wesentlichen aus einem Diisocyanat der Formel

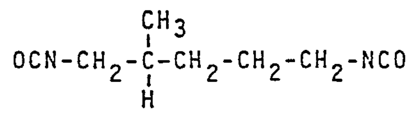

und einem Diisocyanat der Formel

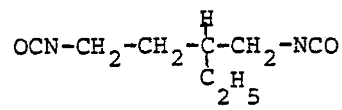

bestehen. Im allgemeinen weisen die beim erfindungsgemäßen Verfahren eingesetzten Diisocyanat-Gemische folgende Zusammensetzungen auf :

88-99 % 2-Methyl-1,5-diisocyanatopentan (MPDI)

12-1 % 2-Ethyl-1,4-diisocyanatobutan (EBDI)

Reine Diisocyanate der erstgenannten Formel können anstelle der Gemische ebenfalls eingesetzt werden.

Bevorzugtes Ausgangsmaterial ist ein entsprechendes Diisocyanat-Gemisch aus ca. 88-95 % 2-Methyl-1,5-diisocyanatopentan und 12-5 % 2-Ethyl-1,4-diisocyanatobutan.

Die Herstellung der Diisocyanat-Gemische erfolgt in an sich bekannter Weise durch Phosgenierung der entsprechenden Diamine (US-3 631 198). Diese werden durch katalytische Hydrierung entsprechender Dinitrile erhalten, die beispielsweise als Nebenprodukt bei der Adipodinitrilherstellung durch Umsetzung von Butadien mit HCN oder bei der Dimerisierung von Acrylnitril anfallen.

Die Durchführung des erfindungsgemäßen Verfahrens erfolgt prinzipiell gemäß den an sich bekannten Verfahren des Standes der Technik, wie sie beispielsweise in den DE-PSen-1 101 394, 1 543 178 oder der DE-OS-1 931 055 beschrieben sind. Im besonderen Maße ist es zur Herstellung der erfindungsgemäßen Verbindungen geeignet, wenn man die Diisocyanate und die Biuretisierungsmittel im Molverhältnis Diisocyanat : monofunktionelles Biuretisierungsmittel von mindestens 11 : 1, vorzugsweise 12 : 1 bis 20 : 1 einsetzt. Unter Biuretisierungsmitteln sollen in diesem Zusammenhang chemische Verbindungen verstanden werden, welche bei höheren Temperaturen mit organischen Isocyanaten unter Bildung von Biureten reagieren. Monofunktionelle Biuretisierungsmittel sind hierbei solche Verbindungen, die bei stöchiometrischer Reaktion in 1-molarer Konzentration die Umwandlung von 3 Mol Isocyanatgruppen in eine Biuretgruppe bewirken. Typische Vertreter von für das erfindungsgemäße Verfahren geeigneten Biuretisierungsmitteln sind Wasser, Wasser als Addukt enthaltende Verbindungen, wie insbesondere kristallwasserhaltige Salze, wasserabspaltende organische Verbindungen, wie z. B. tertiäre Alkohole und Ameisensäure. Bevorzugt beim erfindungsgemäßen Verfahren einzusetzende Biuretisierungsmittel sind Wasser, tert.-Butanol und Ameisensäure bzw. aus diesen Komponenten bestehende Gemische.

Im allgemeinen wird das erfindungsgemäße Verfahren bei Temperaturen von 70-200 °C, vorzugsweise 80-170 °C durchgeführt. Man beginnt die Reaktion im allgemeinen zweckmäßigerweise bei Temperaturen um 80-100 °C und führt sie etwa bei 150-170 °C zu Ende. Nach beendeter Gasentwicklung, die bei der Durchführung des erfindungsgemäßen Verfahrens mit allen erfindungsgemäß geeigneten Biuretisierungsmitteln unter Bildung von bei den Reaktionstemperaturen gasförmigen Nebenprodukten verläuft, wird das Reaktionsgemisch noch so lange bei 150-170 °C weitererhitzt, bis pro Mol (monofunktionelles) Biurettisierungsmittel 3 NCO-Gruppen reagiert haben. Danach wird das Diisocyanatgemisch (MPDI + EBDI) bzw. gegebenenfalls das reine Diisocyanat (MPDI) durch eine Dünnschichtdestillation bei 150 °C/0,1 Torr vom Biuretpolyisocyanat auf Basis von MPDI + EBDI abgetrennt. Die so hergestellten erfindungsgemäßen Biuretpolyisocyanate hatten einen NCO-Gehalt von 20-25 Gew.-%, vorzugsweise 21-24 Gew.-%, einen Monomeren-Gehalt < 0,7 Gew.-% und eine Viskosität unter 3 000 mPas bei 25 °C. Die erfindungsgemäßen Biuretpolyisocyanate besitzen eine Reihe vorteilhafter Eingenschaften, die sie als

Isocyanathärter für Beschichtungssysteme nach dem Isocyanat-Polyadditionsverfahren hervorragend geeignet machen. Aufgrund ihrer niedrigen Viskosität, die in Abhängigkeit vom Oligomerisierungsgrad schwankt, jedoch im allgemeinen unter 3 000 mPas (bei 25 °C) liegt, werden für ihren Einsatz keine oder nur geringe Mengen an Lösungsmitteln benötigt.

Der wesentliche Vorteil gegenüber Polyisocyanaten nach dem Stand der Technik liegt in der besseren Verträglichkeit der erfindungsgemäßen Verbindungen mit den in der Lackindustrie verarbeiteten Polyhydroxyverbindungen, die die Anwendungsbreite dieser gegenüber herkömmlichen Produkten wesentlich vergößert. Außerdem ist die überraschend gute Thermo- wie Oxidationsbeständigkeit der erfindungsgemäßen Verbindungen hervorzuheben.

## Beispiel

1 580 Gewichtsteile MPDI und 100 Gewichtsteile EBDI (10 Mole) wurden bei 80 °C unter intensiver Rührung mit 18 Gewichtsteilen Wasser (1 Mol) innerhalb von ca. 4 Stunden umgesetzt. Anschließend wurde das Reaktionsgemisch auf 150 °C so lange weitererhitzt, bis der NCO-Gehalt unter 43 Gew.-% gefallen war. Danach wurde das nicht umgesetzte Diisocyanat durch eine Dünnschichtdestillation bei 160 °C/0,1 Torr vom Reaktionsprodukt befreit. Das so hergestellte Biuretpolyisocyanat hatte bei 25 °C eine Viskosität von 2 400 mPas und einen NCO-Gehalt von 23,4 Gew.-%.

**Patentansprüche**

1. Biuretpolyisocyanate der Formel

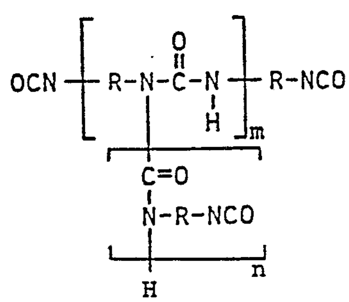

in welcher die einzelnen Reste R gleich oder verschieden sind und Kohlenwasserstoffreste der Formeln

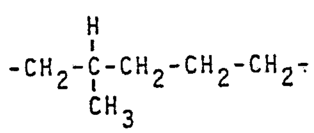

oder

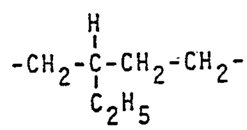

und m ≥ n 1-5 bedeutet.

2. Verfahren zur Herstellung von Biuretpolyisocyanaten gemäß Anspruch 1 durch Umsetzung von überschüssigen Mengen an organischen Diisocyanaten mit Biuretisierungsmitteln bei 70-200 °C, gegebenenfalls in Gegenwart von Katalysatoren und anderen Hilfsstoffen und anschließender Entfernung des überschüssigen, nicht umgesetzten Diisocyanats, dadurch gekennzeichnet, daß man als Diisocyanate ein im wesentlichen aus einem Diisocyanat der Formel

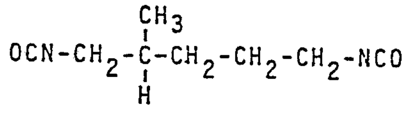

und gegebenenfalls einem Diisocyanat der Formel

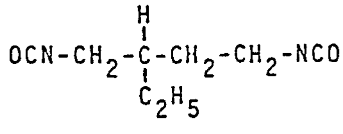

bestehendes Diisocyanat bzw. Diisocyanat-Gemisch verwendet.

**Claims**

1. Biuret-polyisocyanates of the formula

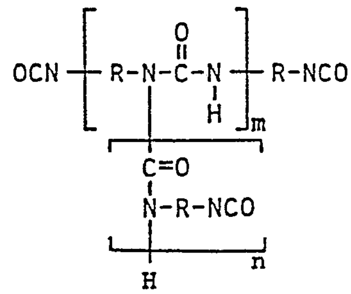

in which the individual radicals R are identical or different and represent hydrocarbon radicals of the formulae

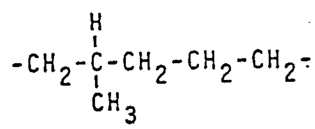

or

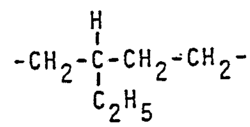

and m ⩾ n is 1 to 5.

2. Process for the preparation of biuret-polyisocyanates according to Claim 1 by reacting excess quantities of organic diisocyanates with biuretising agents at 70-200 °C, if appropriate in the presence of catalysts and other auxiliaries, and subsequent removal of the unconverted excess diisoc ; anate, characterized in that, as the diisocyanates, a diisocyanate or diisocyanate mixture essentially consisting of a diisocyanate of the formula

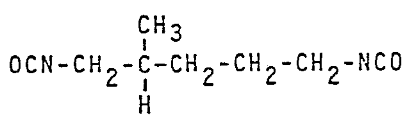

and, if appropriate, a diisocyanate of the formula

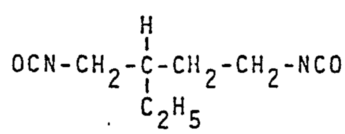

is used.

**Revendications**

1. Biuret-polyisocyanates de formule

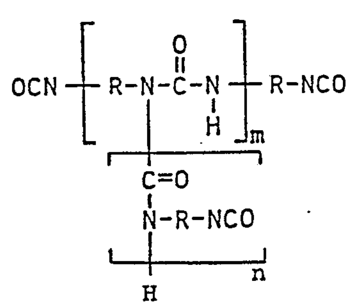

dans laquelle les divers restes R sont identiques ou différents et représentent des restes hydrocarbure des formules

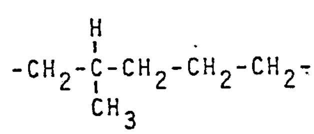

ou

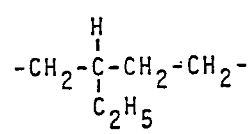

et m ⩾ n 1 à 5.

2. Procédé de fabrication des biuret-polyisocyanates selon la revendication 1, par réaction de quantités en excès de diisocyanates organiques avec des agents de formation du biuret à 70-200 °C, éventuellement en présence de catalyseurs et autres additifs, et élimination subséquente des diisocyanates en excès, n'ayant pas réagi, procédé caractérisé en ce que comme diisocyanate, on utilise un diisocyanate ou un mélange de diisocyanates essentiellement constitué par un diisocyanate de formule

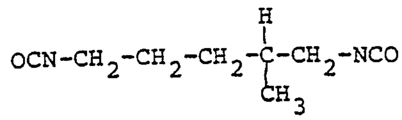

et éventuellement un diisocyanate de formule